# EUROPÄISCHE PATENTSCHRIFT

(11) **EP 3 127 831 B1**
(45) Veröffentlichungstag und Bekanntmachung des Hinweises auf die Patenterteilung: **27.02.2019**
(21) Anmeldenummer: 16181720.0
(22) Anmeldetag: 28.07.2016
(51) Int. Cl.: B65D 35/40, G01F 11/02

(54) **STRANGDOSIERER ZUM AUSBRINGEN VON CREMES**
DOSING DEVICE FOR DISPENSING CREAMS
DISPOSITIF DE DOSAGE DESTINÉ À EXTRAIRE DES CRÈMES

(30) Priorität: 03.08.2015 DE 102015112725; 13.07.2016 DE 102016112891
(43) Veröffentlichungstag der Anmeldung: 08.02.2017
(73) Patentinhaber: F+K Innovationen GmbH & Co.KG, 76534 Baden-Baden (DE)
(72) Erfinder: FUCHS, Karl-Heinz, 78315 Radolfzell (DE)
(74) Vertreter: Patentanwälte und Rechtsanwalt Weiß, Arat & Partner mbB

(56) Entgegenhaltungen:
- WO-A1-03/060435
- WO-A1-2004/092032
- WO-A1-2014/072418
- US-A- 3 388 839

## Beschreibung

### Technisches Gebiet

Die Erfindung betrifft einen Strangdosierer und eine Tube zum Ausbringen von Cremes.

### Stand der Technik

Aus dem Stand der Technik sind Dosierpumpen für Flaschen bekannt, welche aber immer über einen Verdrängerkolben und Manschette mit Betätigungs- und Rückholfeder sowie Ein- und Auslassventile funktionieren und nicht zum Quetschen über die Tubenwandung geeignet sind.

In diesem Zusammenhang wird auf die US 3,388,839 A1 hingewiesen. Dort ist ein Tubenauslass beschrieben, welcher im Inneren einen Aufnahmebereich für Cremes aufweist, wobei der Aufnahmebereich wiederum im Kopf der Tube rotierbar angeordnet ist. Weiter wird auf die WO 03/060435 A1 und die WO 2004/092032 A1 hingewiesen. Dort ist ein Dosierrad in einem Tubenkopf angeordnet.

Das Strangdosieren aus der Tube wird über das Variieren der Tubenauslassöffnung erreicht, wobei die Stranglänge immer unterschiedlich lang ausgebracht wird. Die gewünschte Ausbringlänge kann nur geschätzt werden, wobei der Mensch mit seinem Gefühl und Augenmaß meistens getäuscht wird, so dass der Anwender nicht die genaue, gewünschte Dosiermenge aus der Tube bekommt.

### Aufgabe der Erfindung

Aufgabe der Erfindung ist es, einen Dosierspender für Tuben zu generieren, wobei das Tubenausbringhandling mit in die Dosierabfolge mitintegriert werden soll. Aus der Tube sollen creme- und gelartige Produkte durch das Quetschen der Tubenwand dosiert ausgebracht werden, um eine Über- oder Unterdosierung zu vermeiden sowie das bekannte Tubenhandling dem Anwender zu garantieren.

Mit der Patentanmeldung WO 2014/072418 A1 wurde bereits ein System angemeldet, welches den Anforderungen entspricht. Die neue Anmeldung setzt auf dieser Anmeldung auf und soll mit einem anderen Konstruktionsaufbau mit zusätzlichen Dichtelementen die Möglichkeit von verschiedenen Herstellvarianten bei hohem Produktschutz und Benutzerfreundlichkeit aufzeigen, wobei die Dicht- und Rücksaugfunktion in den Tubenhals gelegt wurde. In diesem Zusammenhang sollen die Offenbarungen der WO 2014/072418 A1 als Teil der Offenbarung dieser Anmeldung gelten.

### Lösung der Aufgabe

Die Aufgabe wird durch die Merkmale nach Anspruch 1 gelöst.

Bei dem erfindungsgemäßen Dosierspender für Tuben handelt es sich um eine Spenderkonstruktion, welche alle über eine Tube ausbringbare Medien verarbeiten kann.

Das Dosierspendersystem ist im Wesentlichen zweiteilig aufgebaut, d.h. es ist ein Ausbringelement als Dosier- und Verschlusskörper sowie die Tube mit dem Auslassventil und dem Rücksaugventil.

Die beiden Baugruppen sind trennbar miteinander über einen Schraub- oder Schnappverschluss gekoppelt, wobei die Koppelung derart gestaltet ist, dass die Funktion der Dosierung nur in Kombination beider Baugruppen funktioniert.

Der Inhalt der Tube oder Quetschflasche spielt in diesem Zusammenhang eine untergeordnete Rolle.

Um unterschiedliche Dosierungen, Stranglängen anzubieten, wird das System in verschiedenen Dosierraumgrößen hergestellt.

Die erfindungsgemäße Vorrichtung dient zum Dosieren, Ausbringen von creme- oder gelartigen Produkten. Es kann sich dabei um Medikamente, Kosmetika, Kleber, Silicon oder ein anderes cremeartiges Produkt handeln. Diese Produkte werden bevorzugt als Tubeninhalt in einer Tube oder Quetschflasche zur Verfügung gestellt.

Der erfindungsgemäße Spender stellt auf einer Tube die aufbringbare Baugruppe dar. Aufbringbar bedeutet hierbei, dass die Dosierradbaugruppe auf die Tube aufgeschraubt, aufgeschnappt oder aufgeclincht oder in einer anderen Weise aufgebracht werden kann.

Der erfindungsgemäße Spender hat ein Betätigungsrad mit einer T-Geometrie, welches den Dosierraum beinhaltet und über eine Drehachsenaufnahme mit dem Verschlusselement drehbar verbunden ist. Das Dosierrad mit der zylindrischen oder eckigen zentrisch angeordneten Dosierkammer wird in der Größe, Ausmaß, Volumeninhalt oder die Oberflächenbeschaffenheit der Dosierkammer dem auszubringenden Produkt angepasst.

Um das Dosierrad benutzerfreundlich zu drehen, zu bedienen, können Drehhilfen am Dosierrad vorgesehen werden in Form von konkaven oder konvexen Geometrieelementen.

Die Dosierkammer wirkt mit einem Kolben, welcher eine kugelige oder zylindrische Formgebung aufweist, zusammen. Dies bedeutet, dass das in die Dosierkammer aus der Tube gequetschte Produkt den Kolben in Richtung des Austritt im Dosierrad bewegt, anschließend wird das Dosierrad manuell um 180° gedreht, so dass bei der nächsten Anwendung das Produkt aus der Tube ausdrückbar ist. Dabei wird der Kolben mit dem Produkt wieder zum Austritt im Dosierrad verschoben wird und dem Anwender zur Verfügung steht.

In diesem Zustand befindet sich der Kolben dicht im Bereich des Produktaustrittes.

An den beiden Enden der Dosierkammer sind jeweils Aus- bzw. Einlassventile verankert und eingeschnappt, um den Kolbenweg zu begrenzen und das Produkt mit der geschlossenen Geometrie zusätzlich zur Atmosphäre zu schützen.

Um eine zusätzliche Abdichtung und ein garantiertes Abscheren des Produktstranges zu gewährleisten, wird ein zusätzliches Teil mit einer umlaufenden Dicht- und Abscherkante in das Rücksaugventil eingesetzt mit dem Ziel, im montierten Zustand der beiden Baugruppen in der Dosierkammer den geförderten Produktstrang beim Drehen des Dosierrades abzuscheren.

Mit dem geschlitzten Einlassventil öffnet die Dosierkammer beim Produktzustrom aus der Tube und schließt, sobald die Kammer gefüllt ist bzw. der Produktstrom aus der Tube nachlässt.

Mit dem geschlitzten Auslassventil öffnet das Ventil sich, wenn der Kolben das Produkt vor sich her aus der Dosierkammer drückt und schließt, wenn der Kolbenweg beendet ist bzw. kein Produkt nachströmt.

Je nach der Dosierradposition wechselt die Funktion des Ventils als Ein- oder Auslassventil, das heißt, das Ventil öffnet als Einlass in die Kammer oder aus der Kammer in die Atmosphäre als Auslass.

Das Material der beiden baugleichen Ventile besteht aus weichem, elastischen Kunststoff.

Das vormontierte Dosierrad wird drehbar in die Wangen des Tubenverschlusses montiert, wobei die Drehachse des Tubenverschlusses in die Nabe des Dosierrades einschnappt und dadurch eine nicht lösbare Verbindung hergestellt wird.

Das Dosierrad wird auch aus zwei Schalenhälften zusammengesetzt, wobei die Schalentrennung am äußeren Umfang des Dosierrades sichtbar ist. Verbindungselemente zentrieren und fixieren die Schalen, wobei das Dosierrad über eine umlaufende geschlossene Dosierradgeometrie verfügt.

Je nach Tubenhals kann der Tubenverschluss ein Schraub-, Schnapp- oder Clinschverschluss sein.

Bei dem erfindungsgemäßen Spender wird der Tubenhals mit einem Rücksaugventil ausgerüstet, welches auch als Behältnisverschluss eingesetzt werden kann.

Die Geometrie des Ventilkörpers ist auch gleichzeitig das Abdichtelement zum Dosierrad, der Tube und der Atmosphäre. Die geschlitzte Auslassgeometrie lässt das Produkt nur unter Druck in Richtung der Dosierkammer durchströmen und schließt gegen das Zurücksaugen über die Eigenspannung in die Tube.

Das Material des Ventilkörpers besteht aus weichem, elastischem Kunststoff, um die Dichtfunktionen zur Tube, zum Dosierrad und zur Atmosphäre zu garantieren.

Beim Quetschen der Tubenwandung drückt sich das Produkt durch den Ventilschlitz und strömt zum Einlassventil des Dosierrades bzw. der Dosierkammer. Wenn der Druckaufbau des Produktes nachlässt, schließt das Ventil.

Beide Baugruppen, das Dosierrad mit dem Tubenverschluss und die Tube mit Rücksaugventil ergeben das Spendersystem für das Quetschbehältnis.

Durch das Aufprellen der Dosierradbaugruppe auf den Tubenhals mit dem integrierten Dichtkörper als Auslassventil entsteht die Dichtvorspannung zwischen beiden Baugruppen.

Der erfindungsgemäße Spender kann bei diesem Konstruktionsaufbau auch ohne zusätzliche Schutzkappe dem Markt angeboten werden, da das Ein- und Auslassventil dichtet und einen zusätzlichen Produktschutz garantiert.

Dabei verankern Schnappelemente das Auslassventil mit dem Dosierrad. Dies hat den Vorteil eines eiinfachen und kostengünstigen Zusammenbaus.

Eine Tube ist dem Tubenhals verbindbar, wobei die Verbindung durch Verschraubung oder Verclipsung erfolgt. Dabei weist der Tubenhals ein integriertes Rücksaugventil, das Dosierrad bestehend aus zwei Schalen, einen Kolben und zwei Ein- und Auslassventilen auf.

Dazu weist der Tubenhals eine Dosierradverankerung auf, wobei das Rücksaugventil in dem Tubenhals integriert ist. Das Dosierrad kann bestehend aus den beiden Schalen und den Ein- und Auslassventilen sowie den Kolben als Einheit in die Dosierradverankerung beispielsweise eingeclipst werden.

In einem anderen Ausführungsbeispiel weist das Dosierrad konvexe Auslassventile und einen kugelförmigen Kolben auf. Dabei ist vorteilhaft, dass durch die konvexen Auslassventile und den kugelförmigen Kolben ein vollständiges Entleeren der Dosierkammer möglich ist und an den Randbereichen keine Creme zurückbleibt.

### FIGURENBESCHREIBUNG

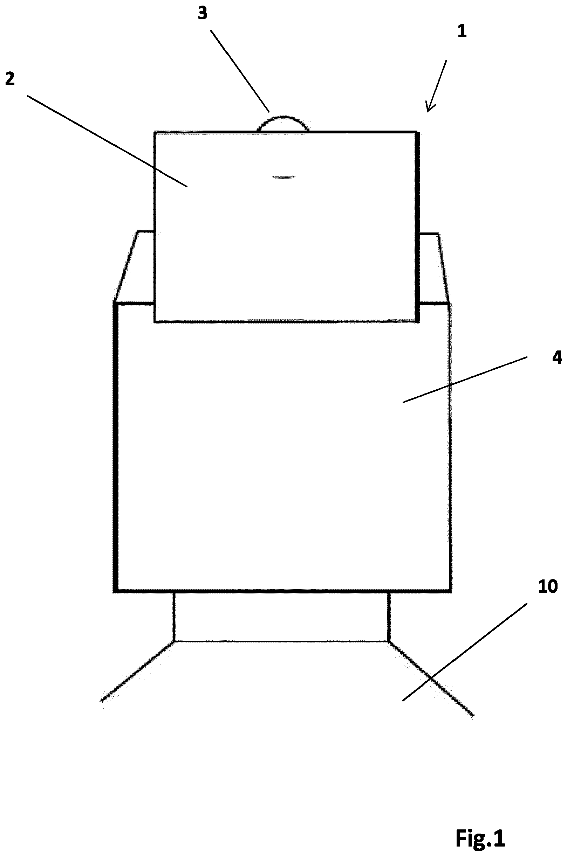

Weitere Vorteile, Merkmale und Einzelheiten ergeben sich aus der nachfolgenden Beschreibung bevorzugter Ausführungsbeispiele sowie anhand der Zeichnungen. Diese zeigen in
Figur 1 zeigt die Ansicht des Spenders 1 mit dem Dosierrad 2, dem Kolben 3, dem Verschluss 4 sowie den Tuben- oder Flaschenhals 10.

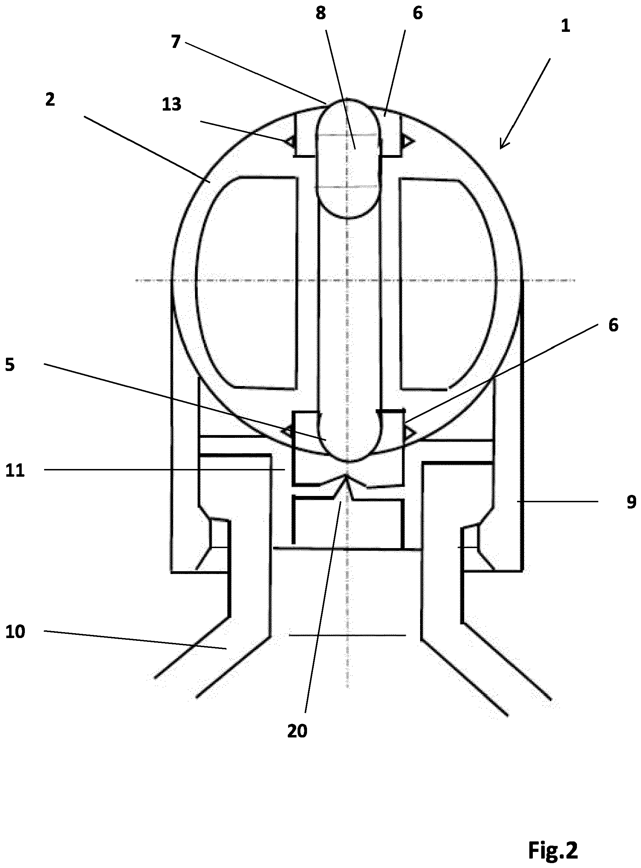

Figur 2 zeigt einen Querschnitt durch den Spender 1, das einstückige Dosierrad 2, welches mit den verankerten und eingeschnappten Einlass- und Auslassventilen 6 mit Austrittsöffnungen 7 und dem Kolben 8 als zylindrische Kolbenvariante dargestellt ist. Der Schnappverschluss 9, welcher das komplette Dosierrad aufnimmt. Im Tuben- oder Flaschenhals 10 ist das produktrichtungsweisende 20 Rücksaugventil 11 integriert. Ausserdem ist eine nicht näher gekennzeichnete Dosierkammer gezeigt, welche die Creme bzw das gelartige Produkt aufnehmen soll.

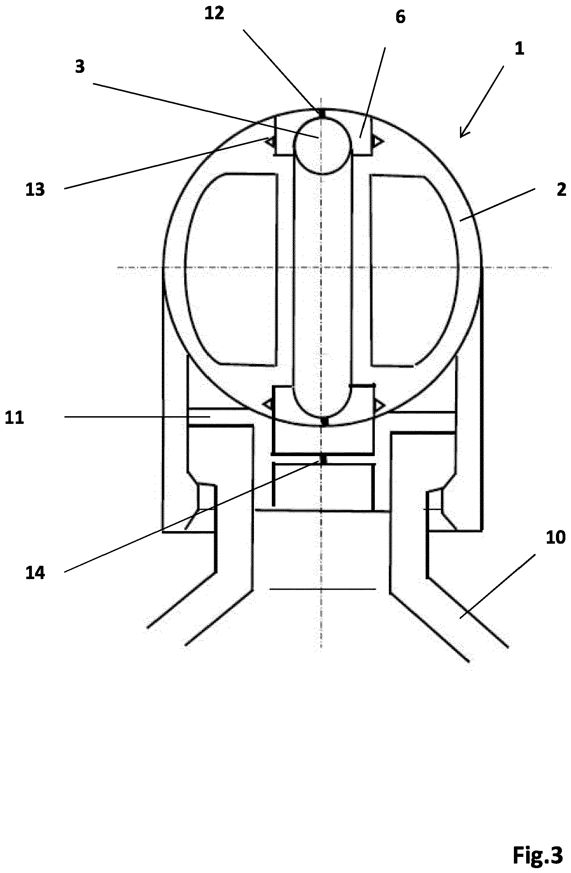

Figur 3 zeigt einen Querschnitt durch den Spender 1 als geschlossene Variante, d.h. der Kolben 8, welcher am Kolbendichtsitz 5 anliegt, ob kugelig oder zylindrisch läuft gegen die geschlitzte Austrittswandung 12 im Ein- oder Auslassventil 6. Die Schnappelemente 13 verankern das Auslassventil 6 mit dem Dosierrad 2. Im Flaschen- oder Tubenhals 10 ist ein geschlitztes Rücksaugventil 11 vorgesehen. Der Schlitz 14 ist hier gut zu erkennen.

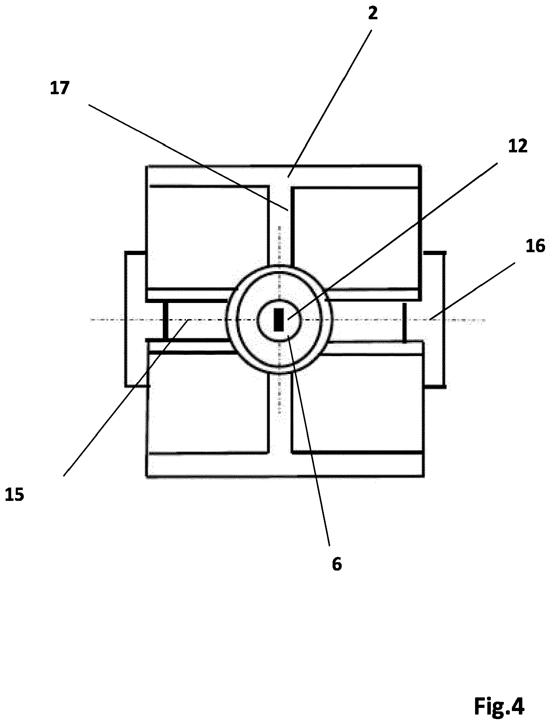

Figur 4 zeigt einen Horizontalschnitt im Bereich des Dosierrades 2 als T-Geometrie 17 das geschlitzte Ein- oder Auslassventil 6 mit der Schlitzung 12 sowie der Achsenlagerung 15 und Achse mit Verschlusswange 16.

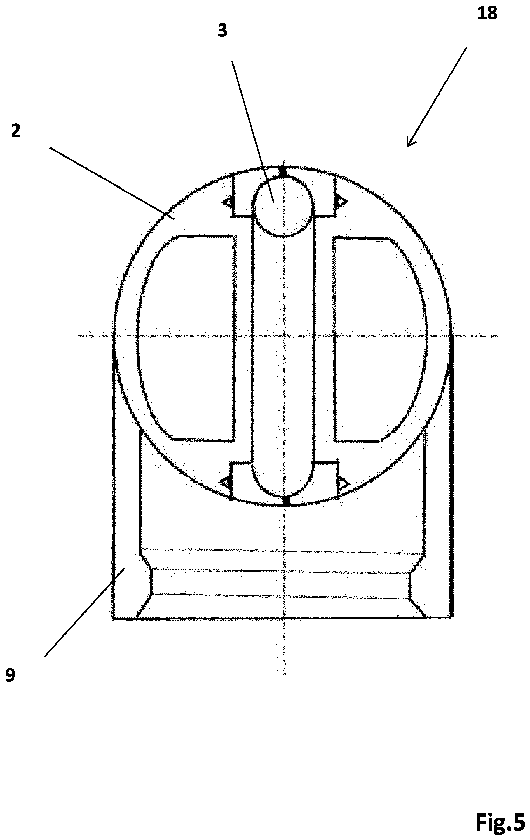

Figur 5 zeigt die Baugruppe 18, Dosierrad 2 mit Verschluss 9 im Querschnitt mit dem Kolben 3 im Dichtsitz 5.

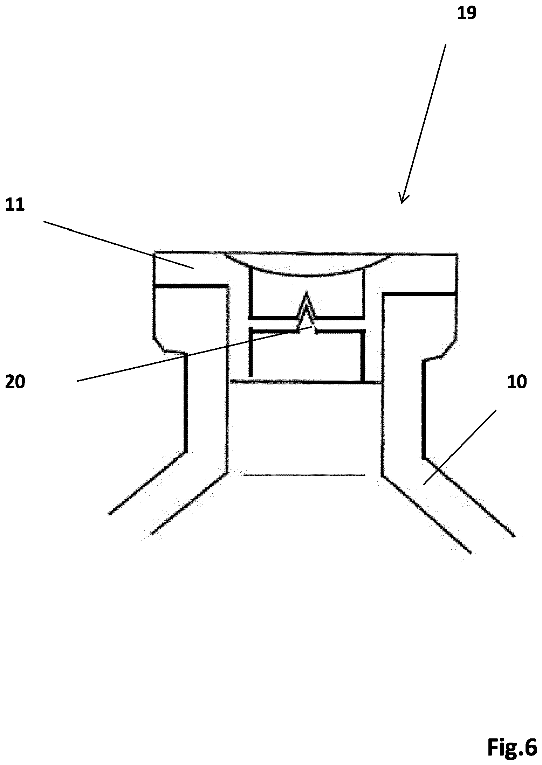

Figur 6 zeigt die Baugruppe 19 mit dem Flaschen- oder Tubenhals 10 und dem Rücksaugventil 11 als strömungsgerichtete Variante 20.

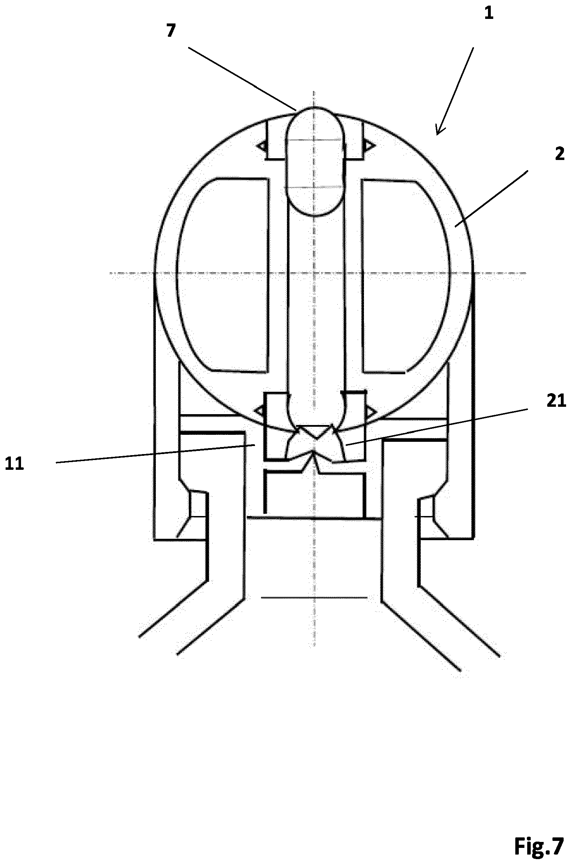

Figur 7 zeigt einen Querschnitt durch den Spender 1 der offenen Variante 7 mit einem Abscher- Abdicht- und Einrastelement 21 für das Dosierrad 2 im Rücksaugventil 11 um beim Drehen des Dosierrades 2 den geförderten Produktstrang der Creme bzw. des gelartigen Produkts in der Dosierkammer abzuscheren.

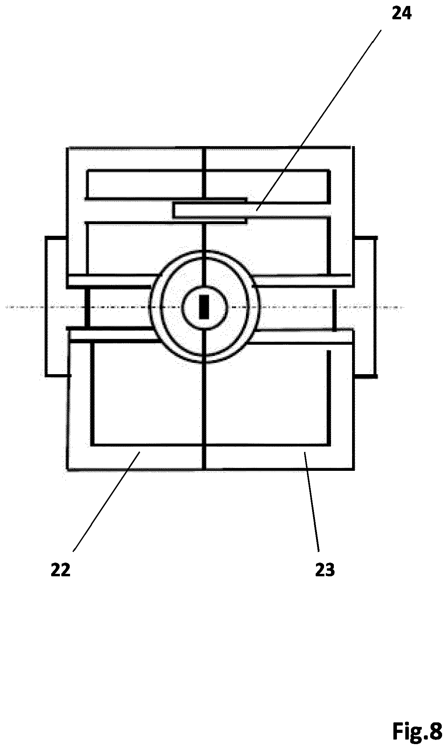

Figur 8 zeigt eine Variante im Horizontalschnitt, wobei das Dosierrad 2 aus zwei Schalen 22 und 23 aufgebaut ist. Die Schalen 22, 23 werden mit den Halbschalenverbindungselementen 24 zusammen gehalten. Bei dieser Version ist eine Trennung am äußeren Umfang des Dosierrades 2 sichtbar.

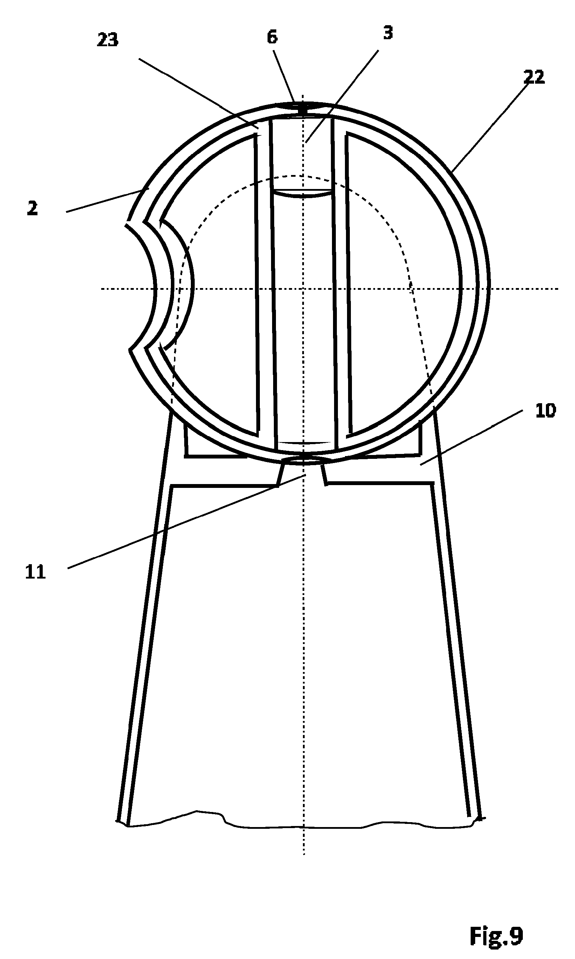

Figur 9 zeigt ein Ausführungsbeispiel im Längsschnitt durch die Tube mit dem im Tubenhals 10 integrierten Rücksaugventil 11. Das Dosierrad 2 ist mit den Schalen 22 und 23 sowie dem Kolben 3 und das Ein- und Auslassventil 6.

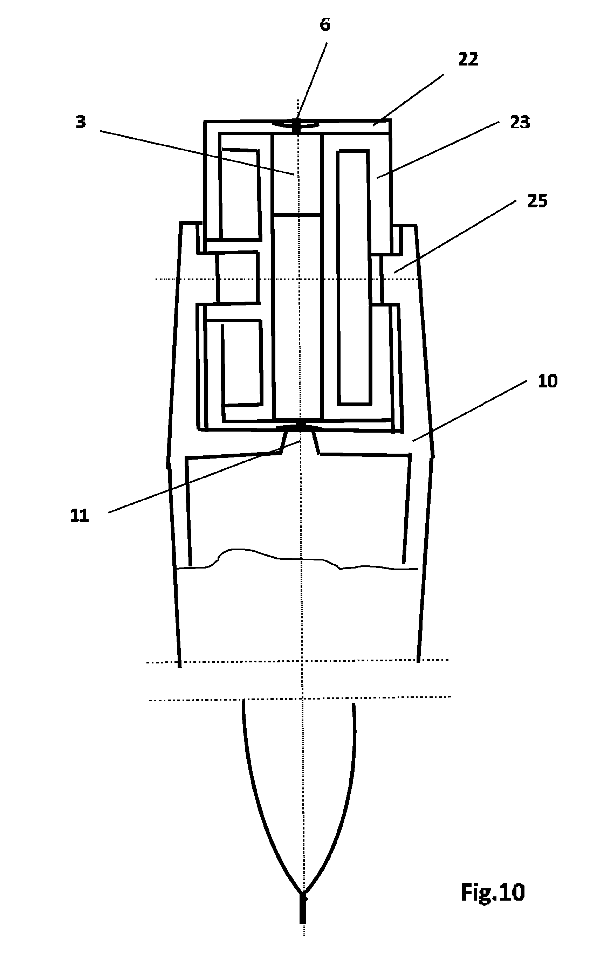

Figur 10 zeigt Figur 9 im Querschnitt durch den Tubenhals 10 mit der Dosierradverankerung 25 sowie das integrierte Rücksaugventil 11 im Tubenhals 10. Das Dosierrad 2 mit den beiden Schalen 22 und 23 und dem Ein- und Auslassventil 6 sowie den Kolben 3 in den Tubenhals 10 integriert.

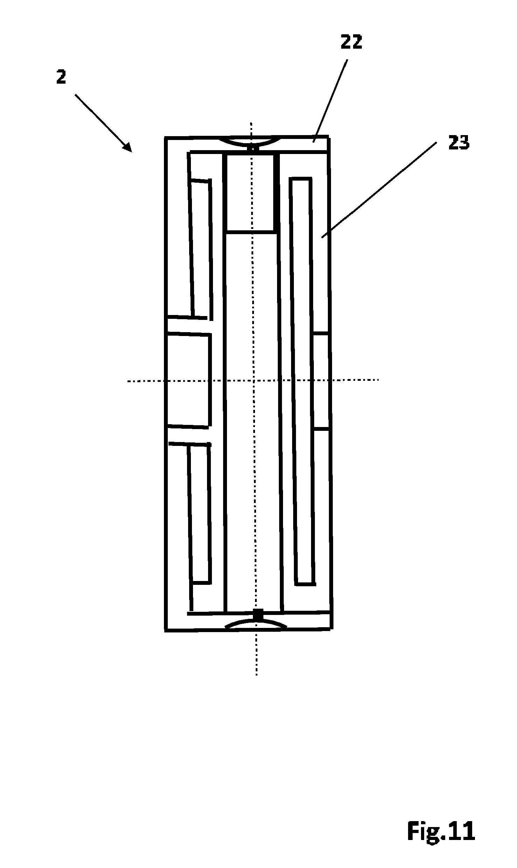

Figur 11 zeigt einen Querschnitt durch das Dosierrad 2 mit den beiden Schalen 22 und 23.

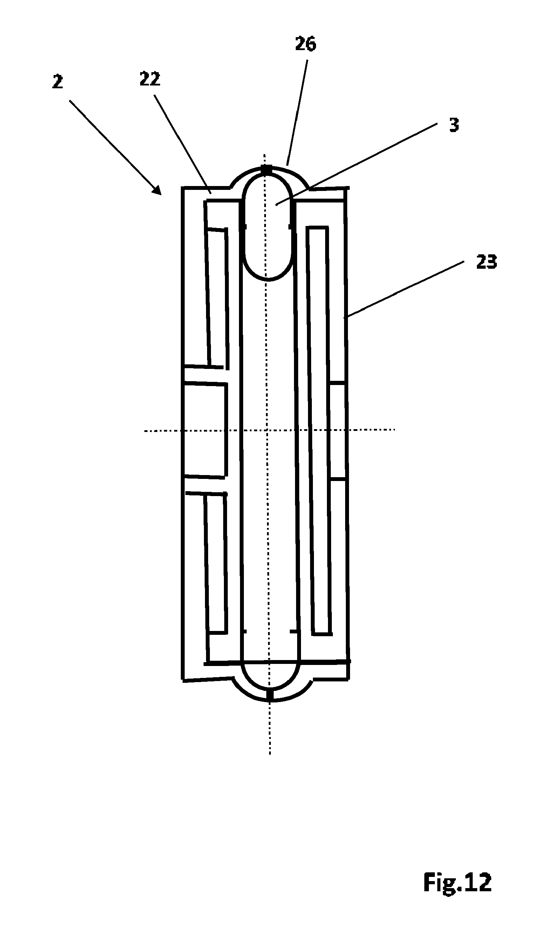

Figur 12 zeigt einen Querschnitt durch eine Dosierradvariante mit den Schalen 22 und 23 mit einem konvexem Auslassventil 26 und kugelförmigem Kolben 3. Dabei ist der kugelförmige Kolben 3 nicht an sich kugelförmig, sondern weist abgerundete Endbereiche auf, die in der jeweiligen Position des Dosierrades 2 jeweils mit dem Ein- und Auslassventil 6 zusammenwirkt. Zusammenwirken bedeutet in diesem Zusammenhang, dass der kugelförmige Kolben 3 mit seinen abgerundeten Endbereichen fromschlüssig in das Ein- und Auslassventil 6 einfährt und die Creme bzw das gelartige Produkt aus der Dosierkammer in der Ausbringposition ausbringt.
   Ausbringposition bedeutet dabei, dass das Dosierrad 2 mit dem Auslassventil weg von der Tube angeordnet ist und das Einlassventil zu der Tube hin angeordnet ist, wobei die Creme bzw das gelartige Produkt bereits in der Dosierkammer ist und durch den abgerundeten Kolben 3 aus dem Auslassventil gedrückt wird, wobei das Ein- und Auslassventil 6 schlitzförmig und damit nachgiebig ausgebildet ist, was gerade den Formschluss zwischen dem abgerundeten Kolben 3 und dem Einlass- und Auslassventil 6 ermöglicht.

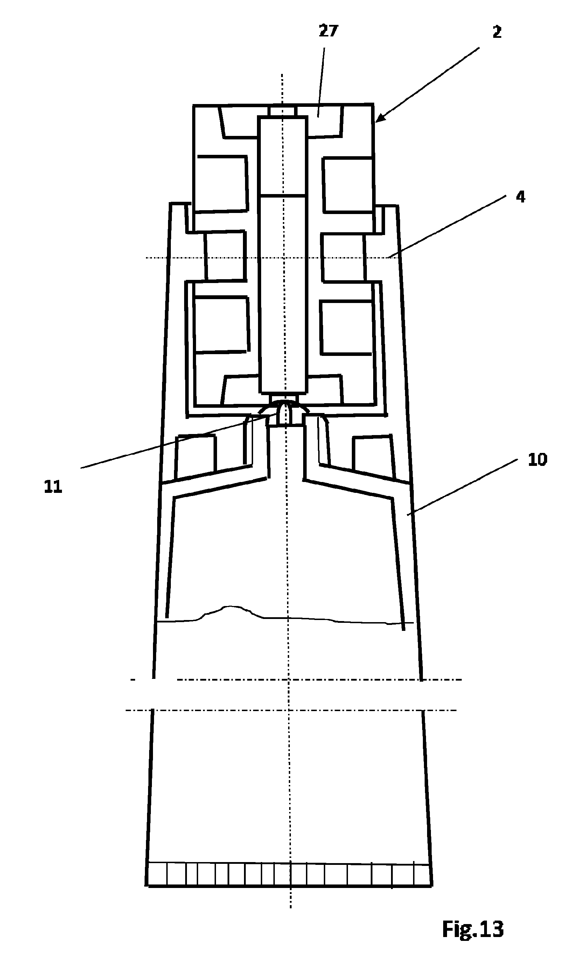

Figur 13 zeigt einen Querschnitt durch ein einstückiges Dosierrad 2 mit dem Endstück 27 sowie den Verschluss 4 und die Tube 10 mit montiertem Rücksaugventil 11.

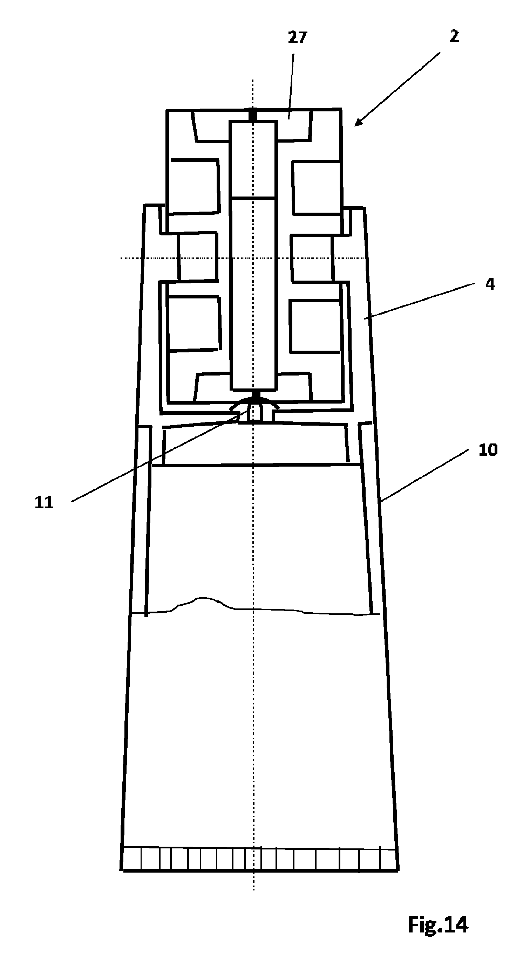

Figur 14 zeigt einen Querschnitt durch ein einstückiges Dosierrad 2 mit dem Ventilendstück 27 und den Verschluss 4, welcher für die Tube auch den Tubenhals 10 generiert.

### Positionszahlenliste

- 1: Spender
- 2: Dosierrad
- 3: Kolben, kugelige Variante
- 4: Verschluss
- 5: Kolbendichtsitz
- 6: Ein- oder Auslassventil
- 7: Offene Variante
- 8: Kolben, zylindrische Variante
- 9: Schnappverschluss
- 10: Tuben- oder Flaschenhals
- 11: Rücksaugventil
- 12: Schlitzung
- 13: Schnappelemente
- 14: Rücksaugventil, Variante geschlitzt
- 15: Achsenlagerung
- 16: Verschlusswange
- 17: T-Geometrie
- 18: Baugruppe Dosierrad
- 19: Baugruppe Flaschenhals
- 20: Rücksaugventil, richtungsweisend
- 21: Abdicht- Abscher- und Einrastelement
- 22: Erste Schale
- 23: Zweite Schale
- 24: Schalenverbindungselemente
- 25: Dosierradverankerung
- 26: Konvexes Auslassventil
- 27: Endstück

## Patentansprüche

1. Strangdosierer für eine Tube und Tube zum Ausbringen von Cremes oder gelartigen Produkten als ein Tubeninhalt aus der Tube, wobei der Strangdosierer auf die Tube aufgebracht ist, wobei der Strangdosierer ein Dosierrad (2) umfasst, wobei das Dosierrad (2) eine Dosierkammer aufweist, wobei innerhalb der Dosierkammer ein Kolben (3) angeordnet ist, wobei das Dosierrad (2) an dem Strangdosierer drehbar angeordnet ist und der Strangdosierer ein Austrittsloch aufweist und der Strangdosierer ein Rücksaugventil (11, 14, 20) aufweist, wobei das Dosierrad (2) eine konkave Fingeraufnahme aufweist, wobei die Dosierkammer durch zwei Ein- und Auslassventile (6) verschlossen ist, wobei die Ein- und Auslassventile (6) jeweils eine Schlitzung (12) aufweisen, wobei das Dosierrad (1) aus einer ersten Schale (22) und einer zweiten Schale (23) besteht, wobei die erste Schale (22) und die zweite Schale (23) durch Schalenverbindungslemente miteinander verbunden sind, wobei das Rücksaugventil (11) in einem Tubenhals (10) der Tube angeordnet ist und ein Abdicht- Abscher- und Einrastelement (21) im Tubenhals (10) umfasst ist, wobei das Abdicht- Abscher- und Einrastelement (21) mit einer umlaufenden Dicht- und Abscherkante in das Rücksaugventil (11) eingesetzt ist, und in der Dosierkammer den geförderten Produktstrang beim Drehen des Dosierrades (2) abschert.

2. Strangdosierer und Tube nach Anspruch 1, **dadurch gekennzeichnet, dass** der Kolben (3) zylindrisch ist.

3. Strangdosierer und Tube nach Anspruch 1 oder 2, **dadurch gekennzeichnet, dass** der Kolben (3) abgerundete Endbereiche aufweist.

4. Strangdosierer und Tube nach einem der vorigen Ansprüche, **gekennzeichnet durch** konvexe Ein- und Auslassventile (26).

5. Strangdosierer und Tube nach einem der vorigen Ansprüche, **dadurch gekennzeichnet, dass** das Dosierrad (2) vormontiert ist und drehbar in die Wangen eines Tubenverschlusses der Tube montiert ist

6. Strangdosierer und Tube nach Anspruch 5, **dadurch gekennzeichnet, dass** das Dosierrad (2) eine Nabe umfasst, wobei eine Drehachse des Tubenverschlusses in die Nabe des Dosierrades (2) eingeschnappt ist.

## Claims

1. A strand doser for a tube and a tube for dispensing creams or gel-like products as tube contents from the tube, wherein the strand doser is applied to the tube, wherein the strand doser comprises a dosing wheel (2), wherein the dosing wheel (2) has a dosing chamber, wherein a plunger (3) is arranged within the dosing chamber, wherein the dosing wheel (2) is rotatably arranged on the strand doser and the strand doser has an outlet and the strand doser has a suck-back valve (11, 14, 20), wherein the dosing wheel (2) has a concave finger-receiving means, wherein the dosing chamber is closed by two inlet and outlet valves (6), wherein the inlet and outlet valves (6) each have a slot (12), wherein the dosing wheel (1) is composed of a first shell (22) and a second shell (23), wherein the first shell (22) and the second shell (23) are connected to one another by shell connection elements, wherein the suck-back valve (11) is arranged in a tube neck (10) of the tube and a sealing, shearing off and engagement element (21) is included in the tube neck (10), wherein the sealing, shearing off and engagement element (21) with an encircling sealing and shearing off edge is inserted into the suck-back valve (11) and in the dosing chamber shears off the conveyed product strand upon rotation of the dosing wheel (2).

2. A strand doser and tube according to claim 1, **characterised in that** the plunger (3) is cylindrical.

3. A strand doser and tube according to claim 1 or 2, **characterised in that** the plunger (3) has rounded end regions.

4. A strand doser and tube according to any one of the previous claims, **characterised by** convex inlet and outlet valves (26).

5. A strand doser and tube according to any one of the previous claims, **characterised in that** the dosing wheel (2) is premounted and is rotatably mounted in the cheeks of a tube closure of the tube.

6. A strand doser and tube according to claim 5, **characterised in that** the dosing wheel (2) comprises a hub, wherein a pivot of the tube closure is snapped into the hub of the dosing wheel (2).

## Revendications

1. Dispositif de dosage par extrusion pour un tube et tube destiné à extraire du tube des crèmes ou des produits sous forme de gel comme contenu de tube, dans lequel le dispositif de dosage par extrusion est placé sur le tube, dans lequel le dispositif de dosage par extrusion comporte une roue de dosage (2), dans lequel la roue de dosage (2) présente une chambre de dosage, dans lequel un piston (3) est disposé à l'intérieur de la chambre de dosage, dans lequel la roue de dosage (2) est disposée de manière rotative sur le dispositif de dosage par extrusion et le dispositif de dosage par extrusion présente un trou de sortie et le dispositif de dosage par extrusion présente une soupape de rétro-succion (11,14, 20),
dans lequel la roue de dosage (2) présente un moyen de réception de doigt concave, dans lequel la chambre de dosage est obturée par deux soupapes d'entrée et de sortie (6), dans lequel les soupapes d'entrée et de sortie (6) présentent, chacune, une fente (12), dans lequel la roue de dosage (1) se compose d'une première coquille (22) et d'une deuxième coquille (23), dans lequel la première coquille (22) et la deuxième coquille (23) sont connectées l'une à l'autre par des éléments de connexion de coquilles, dans lequel la soupape de rétro-succion (11) est disposée dans un col (10) du tube et comporte un élément d'obturation, de cisaillement et d'enclenchement (21) dans le col de tube (10), dans lequel l'élément d'obturation, de cisaillement et d'enclenchement (21) est placé avec un bord d'obturation et de cisaillement dans la soupape de rétro-succion (11) et cisaille dans la chambre de dosage le boudin de produit transporté lors de la rotation de la roue de dosage (2).

2. Dispositif de dosage par extrusion et tube selon la revendication 1, **caractérisés par le fait que** le piston (3) est cylindrique.

3. Dispositif de dosage par extrusion et tube selon la revendication 1 ou 2, **caractérisés par le fait que** le piston (3) présente des zones d'extrémité arrondies.

4. Dispositif de dosage par extrusion et tube selon l'une des revendications précédentes, **caractérisés par** des soupapes d'entrée et de sortie convexes (26).

5. Dispositif de dosage par extrusion et tube selon l'une des revendications précédentes, **caractérisés par le fait que** la roue de dosage (2) est pré-montée et est montée de manière rotative dans les joues d'un obturateur du tube.

6. Dispositif de dosage par extrusion et tube selon la revendication 5, **caractérisés par le fait que** la roue de dosage (2) comporte un moyeu, dans lequel un axe de rotation de l'obturation de tube est encliqueté dans le moyeu de la roue de dosage (2).
